# DEMANDE DE BREVET EUROPEEN

(11) **EP 3 901 891 A1**
(43) Date de publication de la demande: **27.10.2021**
(21) Numéro de dépôt: 21170556.1
(22) Date de dépôt: 26.04.2021
(51) Int. Cl.: G06Q 30/06, G06Q 50/12

(54) **PROCÉDÉ DE PRISE DE COMMANDES DE PRODUCTIONS PONCTUELLES**

(30) Priorité: 24.04.2020 FR 2004124
(71) Demandeur: El Ouardani, Abdellah, 92600 Asnières sur Seine (FR)
(72) Inventeur: El Ouardani, Abdellah, 92600 Asnières sur Seine (FR)
(74) Mandataire: Lefevre-Groboillot, David André

(57) **Abrégé**

L'invention porte sur un procédé de prise de commandes de productions ponctuelles pour une pluralité de zones de commande, comprenant une étape d'association (EASSOC) d'un dispositif électronique (203) avec une zone de commande (202), puis, en réaction à une requête reçue (ERECEP) par voie électronique par un serveur de centralisation des commandes (300), la requête comprenant une date et une identification de dispositif, une étape d'ouverture (E25) par le serveur d'une session de commande pour un émetteur de la requête. Le procédé comprend de plus une étape de génération (EPRES), en réaction à une activation (E1) du dispositif électronique (203) via une interface d'activation (204) du dispositif électronique (203), d'un code d'engagement de commande.

## Description

L'invention concerne un procédé dans le domaine de la gestion des commandes de productions ponctuelles, par exemple, mais sans que cela soit limitatif, pour la restauration. On s'intéresse à identifier une zone de commande ou de livraison, définir un contenu de commande, et vérifier la validité de l'ordre, pour ne lancer la production que si les données ainsi rassemblées sont fiables, pour garantir que le contenu qui sera produit pour la commande reçue soit bien en adéquation avec l'attente d'un client réel et présent le réceptionnant dans la zone de livraison, et payant le prix convenu.

L'invention s'applique particulièrement au domaine des restaurants avec place attablée, où la zone de commande et livraison est une table à laquelle est attablé un client effectuant une commande individuelle ou un groupe de clients effectuant une commande de groupe, et où il est souhaitable, pour des raisons d'efficacité, d'automatiser au maximum les prises de commandes, mais de ne lancer les ordres de préparation en cuisine que s'il y a une garantie forte que le client réceptionnera effectivement et acceptera les produits préparés, en payant le prix convenu.

La rapidité de la chaîne de transmission d'informations et celle de la mise en œuvre de la commande sont importantes pour la rentabilité de l'établissement et la satisfaction des clients, ainsi que pour diminuer les éventuels gaspillages engendrés par des produits préparés mais finalement non consommés par des clients Une telle situation d'échec peut se produire parce que les clients ne sont pas présents dans la zone de livraison au moment où les produits sont livrés, notamment parce qu'un temps important s'est écoulé, ou encore parce que la commande ne correspondant pas à un besoin réel d'un vrai client étant vraiment en position de passer une commande.

Pour satisfaire ces critères, il est proposé un procédé de prise de commandes, notamment pour des productions ponctuelles, pour une pluralité de zones de commande, comprenant une étape d'association d'un dispositif électronique avec une zone de commande, puis, en réaction à une requête reçue par voie électronique par un serveur de centralisation des commandes, la requête comprenant par exemple une date et une identification de dispositif, une étape d'ouverture par le serveur d'une session de commande pour un émetteur de la requête.

Ainsi, selon ces principes initiaux, il est prévu d'ouvrir une session de commande pour un client émetteur de requête, la requête étant reçue par un serveur, et la session étant ouverte dans ce serveur. Celui connait à l'avance plusieurs zones de commande, et la requête comprend, éventuellement dans une forme de code, décodé à un stade précoce ou tardif pour le traitement de la requête par le serveur, une date et l'identification d'un dispositif électronique de commande, ce dernier étant associé, dans la mémoire du serveur, à une zone de commande.

La requête peut être reçue en provenance de divers dispositifs, y compris d'un téléphone intelligent appartenant au client, et la session peut être accessible par un réseau de communications étendu de type Internet, et mise en œuvre sur le téléphone intelligent à travers le réseau étendu.

Selon l'invention, le procédé comprend de plus une étape de génération, en réaction à une activation du dispositif électronique via une interface d'activation du dispositif électronique, d'un code d'engagement de commande comprenant une empreinte des circonstances de ladite activation, l'ouverture de la session n'étant faite que si des circonstances indiquées dans ladite requête permettent une validation de ladite activation.

Ainsi, dans cette zone de commande, un code d'engagement de commande a été généré avec une empreinte des circonstances de l'activation, comme une date et un horaire, ou une localisation géographique, ou encore l'identification du dispositif électronique de commande par sa carte réseau à identifiant unique. Le caractère sécurisé et l'utilisation d'un code et d'une empreinte donnent une forme de fiabilité au processus de commande, qui de plus est aisément associé à une date. Le dispositif de commande peut avoir communiqué le code d'engagement de commande à un téléphone intelligent par différents moyens, y compris la présentation, sur un écran, d'un code-barres à scanner ou à lire à l'aide d'un capteur d'appareil photographique numérique intégré dans le téléphone intelligent.

La validation se fait notamment si une période temporelle de validité n'est pas dépassée lors de la réception de la requête au vu de la date inscrite dans celle-ci, et si la zone de commande est reconnue au vu de l'identification de dispositif.

On bénéficie alors d'une sécurisation du processus au moment de l'ouverture de la session, qui ne se fait que si la requête est associée à une date récente, et identifie une zone de commande grâce à un identifiant de dispositif sécurisé reconnu, ou encore de manière générale si les circonstances indiquées dans la requête sont telles que la commande peut être validée, par le serveur.

Selon certaines caractéristiques optionnelles et avantageuses, définissant des modes de réalisation ou des variantes :
- le procédé peut comprendre, en réaction à l'activation, une obtention d'un horaire courant, l'empreinte comprenant alors un horaire, et la session de commande est ouverte par le serveur si l'horaire indiqué dans ladite requête reçue est suffisamment récent ;
- le procédé peut comprendre, en réaction à l'activation, une obtention d'une localisation géographique courante du dispositif électronique, l'empreinte comprenant alors une localisation géographique, et la session de commande est ouverte par le serveur si une localisation géographique indiquée dans ladite requête reçue est conforme à une localisation géographique autorisée dudit dispositif électronique ;
- le procédé peut comprendre, en réaction à l'activation, une obtention d'une adresse physique d'une carte de communication réseau du dispositif électronique, l'empreinte comprenant alors une adresse physique, et la session de commande est ouverte par le serveur si une adresse physique indiquée dans ladite requête reçue est conforme à une adresse physique de dispositif électronique connu du serveur.

Cela permet de s'assurer qu'aucun contournement de l'association entre le dispositif électronique et la zone de commande n a été menée, et que la commande a été effectuée dans une localisation conforme aux objectifs de l'établissement, en particulier, s'agissant d'un restaurant, dans la salle de restauration prévue. Cela permet d'éviter les fraudes ou toute utilisation anormale liée à une forme de malveillance ou de désordre volontaire ou involontaire.
- la production est la production de commandes alimentaires, la zone de commande étant une place attablée de restauration individuelle ou de groupe, et le dispositif électronique sécurisé associé est associé matériellement, dans le local de restauration, à la place de restauration qui constitue la zone de commande, l'association consiste à visser, coller ou associer avec un aimant le dispositif électronique sécurisé à une surface de la place de restauration ;
- le dispositif électronique sécurisé peut être un terminal d'un réseau de communication électronique de communication local, filaire ou sans fil, et un point d'accès dudit réseau local à un réseau étendu sur lequel est obtenu une référence horaire transmise à plusieurs terminaux dudit réseau local associés chacun à une zone de commande, pour l'inclusion dans le code d'engagement de commande de la date courante, une adresse physique d'une interface dudit terminal pour la communication sur le réseau local étant incluse dans ledit code d'engagement de commande comme identification du dispositif électronique, qui sert à identifier la zone de commande ;
- la requête peut être transmise audit serveur de centralisation des commandes via un réseau étendu, incluant en cas de besoin un réseau de téléphonie cellulaire couvrant la zone de commande, l'ouverture d'une session de commande permet l'accès à un menu sur un téléphone intelligent individuel pour définir un contenu de commande d'un ou plusieurs produits à production ponctuelle au nom du détenteur du téléphone intelligent ;
- la période temporelle de validité peut être comprise entre 5 secondes et 5 minutes ;
- l'attribution de la commande peut se faire par impression d'un ticket ou affichage sur un écran, pour informer un opérateur de production, du contenu de commande et d'une identification de la zone de commande parmi une liste de zones de commande référencées auprès de l'opérateur de production ;
- la génération comprend un affichage sur un écran du dispositif électronique sécurisé ledit affichage étant effectué sous la forme d'un code-barre à 1 ou 2 dimensions codant une adresse sur Internet du serveur et ladite date courante éventuellement cryptée et ladite identification du dispositif électronique de commande servant à identifier la zone de commande, éventuellement également cryptée ;
- la génération comprend l'écriture dans le code d'engagement de commande d'une adresse sur Internet comprenant l'adresse du serveur et l'empreinte, qui est par exemple une concaténation de ladite date courante et de ladite identification du dispositif électronique servant comme identification de la zone de commande ;
- l'activation est menée à partir d'un mode veille dans lequel le dispositif a une consommation d'électricité restreinte, en réaction à un appui sur un bouton poussoir de l'interface homme machine.

L'invention porte aussi sur un système pour une prise de commandes de productions ponctuelles pour une pluralité de zones de commande comprenant un dispositif électronique, configuré pour être disposé à demeure dans une zone de commande, le système comprenant de plus un programme de réception d'une requête par voie électronique par un serveur de centralisation des commandes, et d'ouverture par le serveur d'une session de commande pour un émetteur de la requête.

De manière originale, le dispositif électronique comprend des moyens de génération, en réaction à une activation du dispositif électronique via une interface d'activation du dispositif électronique, d'un code d'engagement de commande comprenant une empreinte des circonstances de l'activation, et le programme comprend des moyens d'ouverture de la session uniquement si des circonstances indiquées dans ladite requête permettent une validation de ladite activation.

Optionnellement mais avantageusement, les moyens de génération comprennent un écran et le code est affiché sous la forme d'un code-barre à deux dimensions sur ledit écran.

L'invention va maintenant être décrite en relation avec les figures.
[Fig. 1] - La figure 1 présente l'architecture générale utilisée dans l'invention.
[Fig. 2] - La figure 2 présente le contrôle du procédé par un gestionnaire, sous forme informatique.
[Fig. 3] - La figure 3 présente des éléments matériels spécifiques mis en œuvre dans l'invention.
[Fig. 4] - La figure 4 présente les étapes d'une première partie d'un procédé de l'invention.
[Fig. 5] - La figure 5 présente les étapes d'une deuxième partie du procédé mentionné.

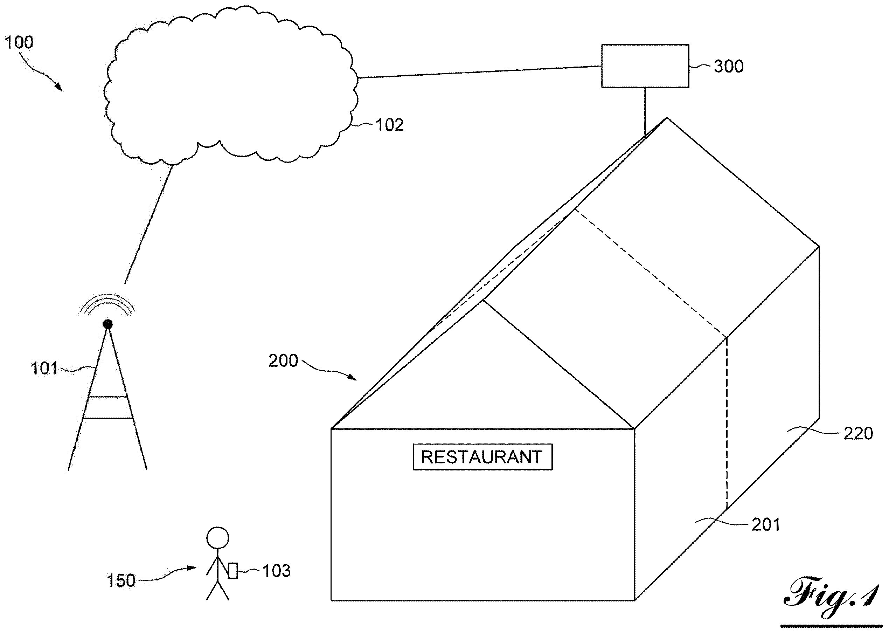

La figure 1 représente un réseau de communication cellulaire 100 comprenant une station de base (ou antenne relai) 101 reliée au cœur de réseau 102 et couvrant un territoire où se situe un établissement de restauration 200 comprenant une salle d'accueil de la clientèle 201 et une cuisine 220. Les clients 150 se présentent et disposent chacun d'un téléphone intelligent individuel 103 permettant de communiquer via le réseau de communication cellulaire 100. La cuisine 220 est reliée à Internet et se connecte à un serveur de gestion de commandes 300, qui est en mesure de communiquer avec le réseau de communication cellulaire 100.

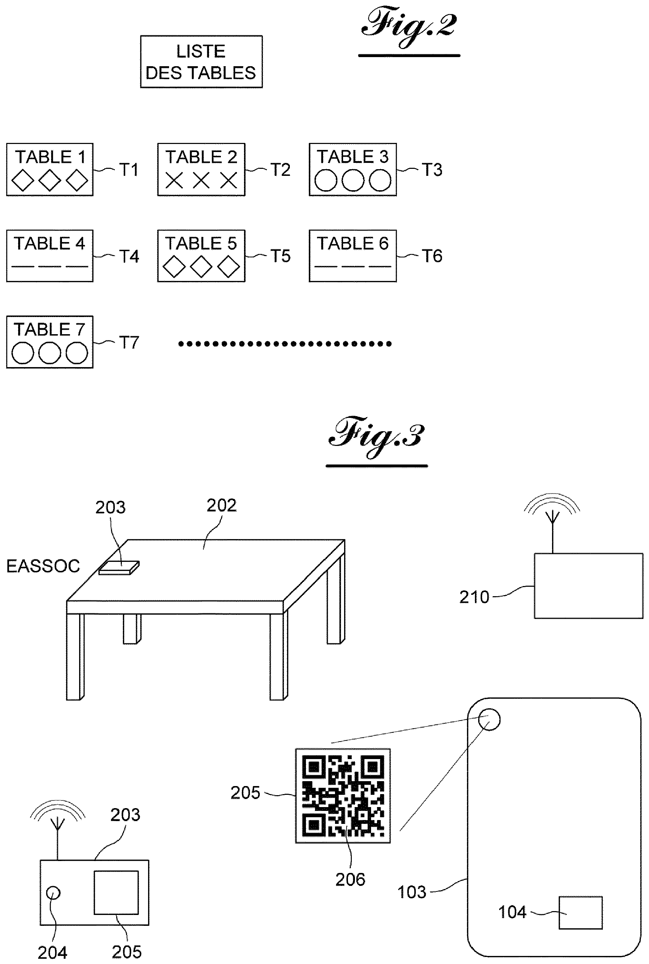

La figure 2 montre le contrôle des commandes par une gestion informatisée mise en œuvre par le serveur de gestion de commande 300, qui dispose d'un référencement des tables de la salle d'accueil de la clientèle 201. Ainsi, au sein du serveur 300, dans l'exemple représenté, sept tables sont identifiées. La table T1 et la table T5 sont, à l'instant représenté sur la figure, indiquées comme « en attente d'accès de la carte du restaurant- session de commande en cours d'initialisation », cet état étant raccourci de manière significative grâce à l'invention par rapport à un processus conventionnel moins informatisé. La table T2 est dans un état « en cours de commande - session de commande engagée ». La table T3 et la table T7 sont dans un état « commande établie et envoyée » et les tables T4 et T6 sont en état « pas de processus de commande sur cette table ».

Le serveur 300 est équipé d'un programme de réception d'une requête par voie électronique pour une pluralité de zones de commande, la requête comprenant un code d'engagement de commande comprenant une date cryptée et une identification d'un dispositif sécurisé. Le programme est capable d'ouvrir une session de commande pour un émetteur de la requête, sur le serveur 300. Ce programme est exécuté par un ou plusieurs processeurs du serveur.

La figure 3 montre une table 202 de la salle d'accueil de la clientèle 201, sur laquelle est fixée matériellement, par exemple par vissage, un boîtier de communication 203. Cette fixation matérielle constitue une étape d'association de la table avec le boîtier, EASSOC. Cette opération de fixation est une opération préalable d'association du boîtier de communication avec la zone de commande et livraison, qui est ici la table 202.

Ce boîtier de communication 203 est équipé d'une alimentation électrique, par exemple par pile, ou par alimentation via le secteur (courant alternatif, 240 ou 110 V). Il peut être équipé d'une batterie rechargeable, y compris par un procédé de recharge sans contact. Le boîtier 203 est une coque qui embarque une carte de communication réseau, ainsi qu'un processeur ou un contrôleur, et dont émerge un bouton-poussoir 204 et un écran 205 qui peut être un système à basse consommation comme un papier électronique. Après appui sur le bouton-poussoir 204 par le client qui s'est attablé à la table 202, un code d'engagement de commande 206 (ici un QR code ou code barre à deux dimensions) est affiché sur l'écran 205 sous le contrôle du contrôleur ou du processeur. Ainsi, le contrôleur ou processeur et l'écran 25 constituent un moyen de génération d'un code d'engagement de commande comprenant une date courante et une identification du dispositif électronique sécurisé.

Le client alors utilise son téléphone portable intelligent 103 pour le scanner et exploiter l'information qu'il contient. Le scan est effectué avec une application de lecture de code-barre, qui identifie (reconnait) une adresse URL dans le code barre et ouvre un navigateur Internet dans le navigateur du téléphone portable intelligent 103 pour permettre au détenteur du téléphone d'accéder au site web offrant une interface de commande des plats du restaurant, hébergé dans le serveur 30 représenté en figure 1. Les applications exécutées par le téléphone intelligent le sont grâce à un processeur 104.

Le boîtier de communication 203 communique par Wifi, par exemple, ou encore par une liaison filaire ou tout moyen de communication sans fil à courte distance, avec un point d'accès 210, définissant pour plusieurs boîtier similaires un accès à un réseau de communication local (LAN), et qui offre une passerelle vers Internet (ou tout réseau étendu).

On va maintenant présenter les étapes du processus qui aboutit à la production de plats commandés par un client, de manière sécurisée et rapide. La production de plats est une production ponctuelle, à la commande, pouvant être différente pour chaque client. Les principes présentés par la suite s'appliquent à d'autres productions ponctuelles, sur commande, sous la condition qu'il existe plusieurs zones de livraison, comme la table du restaurant qui comporte diverses tables identifiées par exemple par un numéro facile à retenir et utiliser pour le personnel du restaurant, ou éventuellement différents guichets de livraison en sortie d'une usine ou d'un atelier, ou des produits sont préparés sur commande, ponctuellement, pour des clients qui se présentent en flux largement continu.

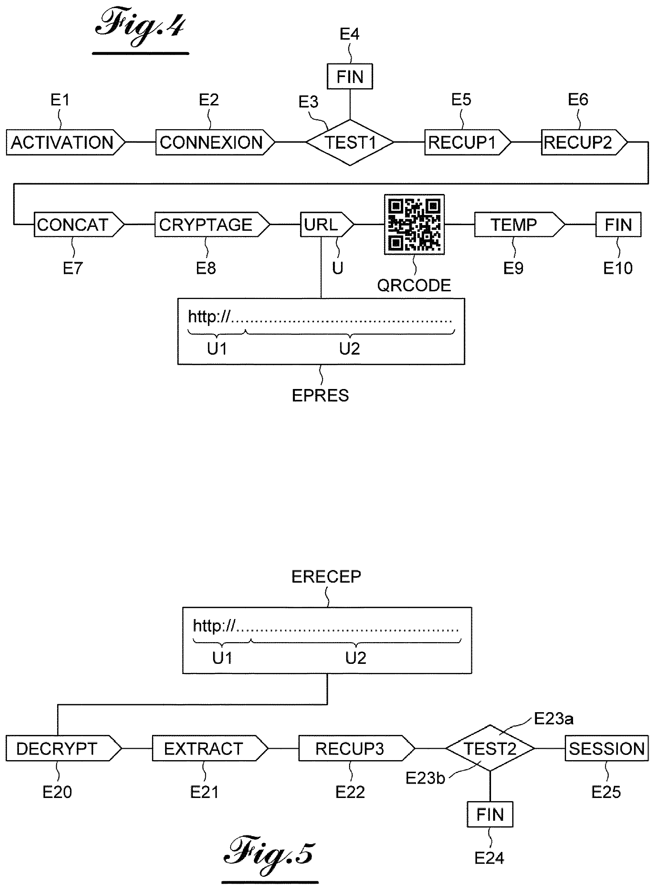

La figure 4 montre les étapes successives du procédé selon l'invention, telles qu'elles sont mises en œuvre par le boîtier 203.

L'étape E1 d'activation est constituée d'un appui sur le bouton-poussoir 204 du boîtier 203 de la table par le client.

Cet appui sort le système électronique du boîtier 203 de son état de veille, et l'amène à tenter de se connecter par le réseau local de communication (LAN) au point d'accès 210, en lançant via son interface réseau, au cours d'une étape E2, une requête de connexion.

Au cours d'une étape de test E3, il est recherché par le processeur ou contrôleur du boîtier électronique si la connexion s'est établie avec succès. SI ce n'est pas le cas, au cours d'une étape E4, la séquence s'achève. Un message d'échec est affiché sur l'écran du boîtier 203.

Si au contraire le boîtier 203 a établi avec succès une communication avec le point d'accès 210, une étape E5 de récupération des date et heure courantes (précis jusqu'aux secondes) est menée, par le boîtier 203 auprès d'un serveur de temps accessible sur Internet auquel est relié le point d'accès.

Puis le processus comprend une étape E6 de récupération de l'adresse physique (adresse MAC) de la carte réseau du boîtier 203 (en général sa carte Wifi, si le boîtier communique avec le point d'accès 210 par Wifi).

Le processus peut à ce stade aussi comprendre une étape de récupération de la localisation courante, par GPS, du boîtier 203. Cela peut se faire en utilisant un matériel électronique adapté inclus dans le boîtier 203 et communiquant avec le contrôleur du boîtier.

Ainsi, on récupère les circonstances de l'activation du boîtier, c'est-à-dire les circonstances de l'engagement de la commande.

Au cours d'une nouvelle étape E7, ces deux (ou trois, voire plus) informations récupérées sont concaténées et au cours d'une étape E8, le résultat de la concaténation est crypté avec une norme de chiffrement avancée (AES) ou une autre cryptographie.

Ainsi, on établit une empreinte des circonstances de l'activation du boîtier, c'est-à-dire une empreinte des circonstances de l'engagement de la commande.

Puis une étape EPRES permet la présentation d'un code de génération de commande, par exemple un QR code, généré par le boîtier 203 et comprenant ce résultat de concaténation, crypté.

Au cours de cette étape EPRES le boîtier 203 génère un code barre QRCODE, codant pour une adresse sur Internet sous la forme d'une URL indiquant l'adresse U1 d'un serveur, à savoir le serveur 300 présenté en figure 1, et fournissant à la suite de l'adresse U1 l'empreinte U2 des circonstances ou empreinte du résultat de concaténation des deux (ou trois, voire plus) informations récupérées et son affichage sur l'écran 205 du boîtier 201. Ainsi, le contrôleur ou processeur et l'écran 25 constituent un moyen de génération d'un code d'engagement de commande comprenant une empreinte des circonstances de l'activation du dispositif, en particulier dans l'exemple une date courante et une identification du dispositif électronique sécurisé, et éventuellement une localisation.

Ce code QRCODE est maintenu affiché 20 secondes (ou toute durée qui est satisfaisante pour le gestionnaire de l'établissement, par exemple comprise entre 5 secondes et 1 minute), mesurée au cours d'une étape de temporisation E9, et à l'issu de cette période, il est effacé de l'écran et le boîtier 203 revient à son état initial, incluant la veille, terminant les étapes du processus l'impliquant (étape E10). Le client est invité, par exemple par un mode d'emploi affiché à proximité, à scanner le code-barre avec son téléphone intelligent, en sorte qu'il soit exploité par une application de lecture de code-barre, déclenchant un navigateur réseau, qui va émettre une requête à destination du serveur de centralisation de commande dont l'adresse est indiquée dans le code-barre.

En figure 5, on a représenté les étapes de processus qui sont mises en œuvre dans le serveur 300.

Celui-ci reçoit, au cours d'une étape ERECEP de réception, et en provenance du téléphone intelligent du client et par le réseau Internet, la version cryptée de la concaténation, qui est inscrite dans l'URL qui a été émise. On rappelle qu'elle a été émise sur Internet et par l'intermédiaire éventuellement du réseau téléphonie cellulaire dans le cadre d'une requête en connexion par l'application de navigation du téléphone portable intelligent 103 du client. Celui-ci peut s'être connecté à Internet par le réseau Wifi du local de restauration, éventuellement.

Au cours d'une étape E20 de décryptage le résultat de la concaténation est retrouvé. Pour cela, il est prévu lors de la mise en place du système que le boîtier 203 et tous les autres boîtiers disposés dans le lieu de restauration dispose d'une clé de cryptographie appariée avec une clé de cryptographie conservée dans le serveur 300. Ainsi, le serveur 300 est en mesure de procéder à la lecture du résultat de concaténation, par décryptage.

Puis au cours d'une étape E21 d'extraction, le serveur 300 extrait les date et heure qui ont été inscrites dans le résultat de concaténation, ainsi que l'adresse physique qui y a également été inscrite, et éventuellement la localisation qui y a été inscrite.

Au cours d'une étape E22, celui-ci récupère des date et heure courantes (précis jusqu'aux secondes) 203 auprès d'un serveur de temps accessible sur Internet auquel est relié le serveur 300.

En effet, comme cela a été dit, le serveur 300 est équipé d'un programme de réception d'une requête par voie électronique pour une pluralité de zones de commande, la requête comprenant un code d'engagement de commande comprenant une date cryptée et une identification d'un dispositif sécurisé. Le serveur, grâce à ce programme, les reçoit et les extrait pour les exploiter. Ce programme est exécuté par un ou plusieurs processeurs du serveur.

Au cours d'une étape E23a il est vérifié, par le serveur 300, que l'adresse physique qui a été extraite à l'étape E21 est répertoriée comme correspondant à celle d'un boîtier 203 qui a été mis en place dans un restaurant couvert par le service. Ainsi on vérifie si l'adresse physique est connue du serveur.

Il est aussi vérifié, au cours d'une étape E23b, si de plus les date et heure qui ont été extraites de la requête au cours de l'étape E21 sont suffisamment récentes pour que la requête puisse être considérée comme fiable. Un délai de 20 secondes entre l'horaire exact (précis à la seconde près) inscrit dans la requête et la date courante obtenue au cours de l'étape E22 auprès d'un serveur de temps est considéré comme un maximum pour déterminer si la requête est validée. Éventuellement, il est aussi vérifié que la localisation retrouvée correspond à la localisation d'une zone de commande autorisée (non représenté).

Si l'une ou l'autre des deux (ou trois, voire plus) parties du test est négative, il est mis fin au cours de l'étape E24 au processus de traitement de la requête reçue par le serveur, celle-ci étant ainsi refusée. Un message de refus est envoyé aux fins d'affichage sur l'écran du téléphone intelligent.

Si au contraire, les deux (ou trois, voire plus) parties du test sont positives, il est procédé au cours d'une étape E25 à l'ouverture d'une session de commande pour l'émetteur de la requête, qui va au cours de cette session, pouvoir interagir avec le programme mis en œuvre dans le serveur 300 lui permettant de choisir des plats proposés sur la carte du restaurant, les mettre dans un panier de commande, et finaliser sa commande quand il sera prêt à le faire.

En effet, comme cela a été dit, le serveur 300 est équipé d'un programme capable d'ouvrir une session de commande pour un émetteur de la requête, sur le serveur 300. Ce programme est exécuté par un ou plusieurs processeurs du serveur.

Dans un mode de réalisation alternatif, le téléphone intelligent du client ne se connecte pas au serveur 300 par le réseau de télécommunication cellulaire et Internet, mais par un réseau Wifi du local de restauration. Il en résulte que le programme du serveur 300 avec lequel le navigateur du téléphone intelligent communique n'est pas un site internet, mais un site intranet du restaurateur. Le serveur est en tout état de cause un serveur centralisateur des commandes, alors qu'il existe plusieurs zones de commande et livraison.

A la place d'une table de restaurant, la zone de commande peut prendre d'autres formes, comme par exemple la voiture du client dans un restaurant de type drive-in, avec un circuit comprenant une entrée et une sortie entre lesquels la voiture progresse. La voiture constitue ainsi une zone de commande mobile. La voiture peut être identifiée pour les opérateurs par sa plaque d'immatriculation ou par un numéro ou un signe qui lui est attribué lors de son entrée dans le circuit. Le boîtier peut être confié au conducteur lors de cette entrée dans le circuit, et cela constitue alors l'étape d'association EASSOC. On s'assure alors qu'il y a une vérification que le conducteur rend le boîtier avant de quitter le circuit du restaurant drive-in, par exemple au moment du paiement.

Au final, il est remarquable que la session de commande n'est ouverte que si la requête en ouverture d'une session de commande permet de reconnaître l'exemplaire exact du boîtier qui a été activé par l'émetteur de la requête, et si la requête est très récente (moins de 20 secondes, par exemple). Ces deux contrôles offrent une grande sécurité pour le lancement du processus de commande, qui est sécurisé, et garantit au producteur qu'il aura un rendement maximum pour son installation.

Le boîtier 203 peut être, de manière générale, remplacé par un dispositif électronique sécurisé, disposant d'une référence d'identification. Dans les modes de réalisation précédents, on a évoqué un lot, par exemple d'une cinquantaine de boîtiers, pour une cinquantaine de tables, par exemple, et qui constitue un matériel dédié pour les commandes du restaurant. Mais le dispositif électronique sécurisé peut prendre d'autres formes, et n'est pas nécessairement un matériel strictement dédié pour la prise de commande, auquel cas il peut avoir d'autres fonctions en parallèle. Il peut être apporté par le client, qui dispose lui-même d'un appareil téléphonique intelligent qui peut télécharger une application qui transforme le téléphone en dispositif effectuant les fonctions du boîtier 203, sous réserve qu'il soit vérifié que le téléphone est localement associé à la zone de commande et livraison. Par ailleurs, l'étape EPRES n'a pas forcément la forme d'un affichage de QRcode sur un écran qui fait l'objet d'un scan, et peut être mise en œuvre d'une autre manière, comme une transmission Bluetooth ou Zigbee, ou encore une communication entre deux applications mises en œuvre par un processeur, qui mène en tout état de cause à une émission sur le réseau internet d'une requête émise localement depuis la zone de commande ou livraison vers le serveur centralisateur des commandes.

Dans la description, on a évoqué un test à deux ou trois branches, voire plus. Les vérifications de la date et du numéro de carte matériel du dispositif électronique ont été présentées comme les premières à être mises en œuvre, mais l'invention peut se mettre en œuvre avec seulement la vérification de la localisation, si cela est plus utile, ou seulement la vérification de la localisation et celle du numéro de carte matériel. On peut aussi décider de vérifier la date et la localisation, et ne pas vérifier le numéro de matériel. D'autres informations décrivant les circonstances de l'activation peuvent être utilisées.

Le boîtier 203 est par exemple un système comprenant une batterie rechargeable, pouvant par exemple être rechargée par un port de type USB.

## Revendications

1. Procédé de prise de commandes pour une pluralité de zones de commande, comprenant une étape d'association (EASSOC) d'un dispositif électronique (203) avec une zone de commande (202), puis, en réaction à une requête reçue (ERECEP) par voie électronique par un serveur de centralisation des commandes (300), une étape d'ouverture (E25) par le serveur d'une session de commande pour un émetteur de la requête, le procédé étant **caractérisé en ce que** le procédé comprend de plus une étape de génération (EPRES), en réaction à une activation (E1) du dispositif électronique (203) via une interface d'activation (204) du dispositif électronique (203), d'un code d'engagement de commande (206) comprenant une empreinte (U2) des circonstances de ladite activation, l'ouverture (E23) de la session n'étant faite que si des circonstances indiquées dans ladite requête permettent une validation de ladite activation.

2. Procédé de prise de commandes selon la revendication 1, **caractérisé en ce qu'**il comprend, en réaction à l'activation, une obtention d'un horaire courant, l'empreinte (U2) comprenant alors ledit horaire courant, et la session de commande est ouverte par le serveur si l'horaire indiqué dans ladite requête reçue est suffisamment récent.

3. Procédé de prise de commandes selon la revendication 1 ou la revendication 2, **caractérisé en ce qu'**il comprend, en réaction à l'activation, une obtention d'une localisation géographique courante du dispositif électronique, l'empreinte (U2) comprenant alors ladite localisation géographique courante, et la session de commande est ouverte par le serveur si une localisation indiquée dans ladite requête reçue est conforme à une localisation autorisée dudit dispositif électronique.

4. Procédé de prise de commandes selon l'une des revendications 1 à 3, caractérisé qu'il comprend, en réaction à l'activation, une obtention d'une adresse physique d'une carte de communication réseau du dispositif électronique, l'empreinte (U2) comprenant alors ladite adresse physique, et la session de commande est ouverte par le serveur si une adresse physique indiquée dans ladite requête reçue correspond à un dispositif connu du serveur.

5. Procédé de prise de commandes selon l'une des revendications 1 à 4, **caractérisé en ce que** la production est la production de commandes alimentaires dans un restaurant (200), la zone de commande (202) étant une place attablée (202) de restauration individuelle ou de groupe, et le dispositif électronique (203) associé est associé matériellement à la place de restauration qui constitue la zone de commande, l'association (EASSOC) consistant à visser, coller ou associer avec un aimant le dispositif électronique (203) à une surface de la place de restauration.

6. Procédé de prise de commandes selon l'une des revendications 1 à 5, **caractérisé en ce que** le dispositif électronique (203) est un terminal d'un réseau de communication électronique local, filaire ou sans fil, un point d'accès (210) dudit réseau local à un réseau étendu sur lequel est obtenu (RECUP1) une référence horaire pouvant être transmise à plusieurs terminaux dudit réseau local associés chacun à une zone de commande, pour l'inclusion dans le code d'engagement de commande (206) de la date courante, et une adresse physique d'une interface dudit terminal (203) pour la communication sur le réseau local étant lue (RECUP2) pour être incluse dans ledit code d'engagement de commande comme identification du dispositif électronique servant comme identifiant de la zone de commande.

7. Procédé de prise de commandes selon l'une des revendications 1 à 6, **caractérisé en ce que** la requête est transmise (ERECEP) audit serveur (300) via un réseau étendu, incluant en cas de besoin un réseau de téléphonie cellulaire (100) couvrant la zone de commande, l'ouverture d'une session de commande permettant l'accès à un menu sur un téléphone intelligent individuel (103) pour définir un contenu de commande d'un ou plusieurs produits à production ponctuelle au nom d'un détenteur (150) du téléphone intelligent identifié comme l'émetteur de la requête.

8. Procédé de prise de commandes selon l'une des revendications 1 à 7, **caractérisé en ce que** la période temporelle de validité est comprise entre 5 secondes et 5 minutes.

9. Procédé de prise de commandes selon l'une des revendications 1 à 8, **caractérisé en ce que** la génération (EPRES) comprend l'affichage du code d'engagement de commande (206) sous la forme d'un code-barre à deux dimensions (QRCODE) sur un écran (205) du dispositif électronique (203).

10. Procédé de prise de commandes selon l'une des revendications 1 à 9, **caractérisé en ce que** la génération (EPRES) comprend une écriture dans le code d'engagement de commande (206) d'une adresse sur Internet (U) comprenant l'adresse du serveur (U1) et l'empreinte (U2).

11. Procédé de prise de commandes selon l'une des revendications 1 à 10, **caractérisé en ce que** l'activation (E1) est menée à partir d'un mode veille dans lequel le dispositif électronique (203) a une consommation d'électricité restreinte, l'activation étant effectuée par appui sur un bouton poussoir (204) constituant l'interface d'activation.

12. Système pour une prise de commandes pour une pluralité de zones de commande comprenant un dispositif électronique (203), configuré pour être disposé à demeure dans une zone de commande (202), le système comprenant de plus un programme de réception d'une requête par voie électronique par un serveur de centralisation des commandes (300), et d'ouverture par le serveur d'une session de commande pour un émetteur de la requête, le système étant **caractérisé en ce que** le dispositif électronique (203) comprend des moyens de génération, en réaction à une activation du dispositif électronique (203) via une interface d'activation (204) du dispositif électronique (203), d'un code d'engagement de commande (206) comprenant une empreinte (U2) des circonstances de l'activation, et le programme comprend des moyens d'ouverture de la session uniquement si des circonstances indiquées dans ladite requête permettent une validation de ladite activation.

13. Système pour une prise de commandes selon la revendication 10, **caractérisé en ce que** les moyens de génération comprennent un écran (205) et le code d'engagement de commande (206) est affiché sous la forme d'un code-barre à deux dimensions (QRCODE) sur ledit écran,
